# EUROPEAN PATENT SPECIFICATION

(11) **EP 1 774 202 B1**
(45) Date of publication and mention of the grant of the patent: **22.12.2010**
(21) Application number: 05762931.3
(22) Date of filing: 28.07.2005
(51) Int. Cl.: F16H 48/22, F16H 48/10, B60K 17/346

(54) **VARIABLE TORQUE BIASING DEVICE**
VORSPANNVORRICHTUNG MIT VARIABLEM DREHMOMENT
DISPOSITIF D'ORIENTATION DE COUPLE VARIABLE

(30) Priority: 30.07.2004 GB 0417067; 26.08.2004 GB 0419056; 19.11.2004 GB 0425495
(43) Date of publication of application: 18.04.2007
(73) Proprietor: RICARDO UK LIMITED, Shoreham-by-Sea, West Sussex BN43 5FG (GB)
(72) Inventor: WHEALS, Jonathan Charles, Warwickshire CV8 2SW (GB)
(74) Representative: Chettle, Adrian John
(86) International application number: PCT/GB2005/002956
(87) International publication number: WO 2006/010931

(56) References cited:
- EP-A- 0 575 151
- EP-A- 0 841 206
- WO-A-2004/018248
- US-A- 4 943 267
- US-A- 6 098 737

## Description

This invention relates to torque biasing devices, and particularly to such devices when applied to distribute torque between the wheels of a motor vehicle.

Torque biasing techniques are typically used in motor vehicles to increase the proportion of drive torque directed to one of two drive shafts. A device for varying left/right drive torque to wheels of a motor vehicle is described in EP-A-0575121. Such devices typically comprise epicyclic gear trains having control apparatus adapted to increase and/or reduce the speed of certain gear train elements, thereby to direct an increased proportion of torque to one drive shaft rather than another.

Controllable torque biasing devices are used in motor vehicles to influence traction and yaw stability by distributing drive torque in accordance with control algorithms associated with e.g. yaw rate, yaw acceleration and time derivatives of vehicle slip angle during cornering.

In vehicle applications, one important requirement is to ensure that component parts are as small as reasonably practicable in order to give maximum freedom to the vehicle designer. Furthermore, regard must be had to length/width ratios, mass, complexity of manufacture and assembly, inertia of rotating components and cooling.

EP-A-0841206 discloses a torque splitting device having hydraulic clutches so as to avoid any discontinuity in control as the temperature of the actuating oil varies from standard values.

WO 2004/018248A discloses a vehicle transmission system having the features of the preamble of claim 1 appended hereto.

According to the invention, there is provided a torque biasing unit for a motor vehicle and having an input, two outputs, and therebetween an epicyclic differential module adapted to distribute torque from the input to the outputs, the unit further comprising a gear module and a control module, said gear module comprising epicyclic gear trains side by side and having a common planet carrier, and independently rotatable planets thereon, the gear module being operatively connected to the planet carrier of said differential module, and said control module being adapted to increase and decrease the speed of the planet carrier of said gear module to bias the differential module to provide more torque to one of said outputs than to the other, wherein said differential module, gear module, and control module have a common axis of rotation, and are arranged in axial series with the gear module centremost, wherein said epicyclic differential module comprises an annulus connected to said input, a sun connected to one of said outputs and a planet carrier connected to the other of said outputs, **characterized in that** the planet carrier of the differential module has double planets operative in series between said annulus and sun, and wherein said gear module comprises two epicyclic gear trains side by side and having suns joined for rotation in common, one annulus of the gear module being connected to the planet carrier of said differential module, and the other annulus of the gear module being connected to one of said outputs.

In this specification reference to 'control' module includes reference to 'actuation' module.

Preferably the control module is adapted to both increase and decrease the speed of the carrier of the gear module. The control module may comprise a brake operable to retard the carrier of the gear module. The control module may comprise an epicyclic gear train having a sun connected to a brake, an annulus connected to the planet carrier of said gear module, and a planet carrier connectable to said input. In such an arrangement a single brake unit can be used to speed-up the planet carrier of the gear module.

Preferably one of said outputs is a shaft, and the suns of said gear module are co-axial therewith. The sun of said differential module may also be co-axial with the suns of the gear module.

In a preferred embodiment the other of said outputs is a shaft, and the outputs are co-axial, and oppositely directed.

In a preferred embodiment the control module comprises two independently operable brakes and an epicyclic control module train, the brakes being operable in direct and indirect modes, in direct mode one brake being connected to retard the carrier of said gear module, and in indirect mode the other brake being connected to speed up the carrier of said gear module via said epicyclic control module train.

In a first embodiment, the control module comprises an annulus connectable to said input, a sun connected to the carrier of said gear module, double planets and a planet carrier, wherein said brakes are connected one each of the planet carrier of the gear module and the planet carrier of the control module train.

In a second embodiment, the control module comprises a planet carrier connectable to said input a sun connected to one of said brakes and to the planet carrier of the gear module, and an annulus connected to the other of said brakes.

In a third embodiment, the control module comprises a planet carrier connectable to said input, a sun connected to one of said brakes, and an annulus connected to the other of said brakes and to the planet carrier of the gear module.

In a fourth embodiment the control module comprises an annulus connected to the planet carrier of the gear module and to one of said brakes, a sun connected to the other of said brakes, and a planet carrier connectable to one of said outputs.

In a fifth embodiment, the control module comprises a sun connected to the planet carrier of said gear module and to one of said brakes, an annulus connected to the other of said brakes, and a planet carrier connectable to one of said outputs.

In a sixth embodiment the control module comprises a brake and an epicyclic control module train comprising a carrier connectable to said input, an annulus connected to the carrier of said gear module, and a sun connected to said brake whereby said brake is operable in direct and indirect modes, in direct mode the brake being connected to retard the carrier of said gear module, and in indirect mode the brake being connected to speed up the carrier of said gear module via said epicyclic control module train.

In a seventh embodiment a second gear module is provided having two epicyclic gear trains side by side and having suns joined for rotation in common, one annulus of the second gear module being connectable to said input, and the other annulus of the second gear module being connectable to said one of said outputs, and the control module comprising a brake operable to directly retard one or other of the gear module planet carriers.

In a preferred embodiment the brake is connectable via two separately actuable digital clutches, one clutch being operatively on the input side of the carrier of said epicyclic control module train, and the other clutch being operatively on the brake side of the connection between the annulus of the epicyclic control module train and the carrier of the gear module. The unit may further include two torque limiting clutches, one each in series with said digital clutches. In this preferred embodiment the planet carrier of said epicyclic control module train may be radially outside the planet carrier of said gear module.

An aspect of the invention concerns a transmission having a gear module with suns linked for rotation together.

Application of the control (actuation) module to all embodiments is determined by an external computer in accordance with signals from vehicle and other sensors. These sensors may provide information relating to, for example, steering angle, yaw rate, wheel braking and wheel speed of the vehicle; and external information, for example relating to vehicle position (e.g. GPS) and road surface friction. Thus in use the computer will determine whether a wheel of the vehicle requires relative speeding-up or slowing down, and transmit a control signal to the torque biasing device so as to cause a vehicle response in accordance with a pre-defined algorithm, and an algorithm may be active and thus capable of continual change according to influencing factors. Several algorithms may of course be provided according to the required conditions of use. Torque input may be provided from a torque sensor at the or each speed adjusting device of the control module - thus each output may have a torque sensor to provide feedback.

Various kinds of brake are suitable for the control module. Multi-plate wet brakes having several interleaved disc-like members arranged about an axis of rotation are a preferred solution. Another preferred arrangement is to use a magneto-rheological brake in which the working fluid between relatively rotatable components can be stiffened, to cause drive therebetween - such a brake requires connection to a source of electric power, and thus avoids the complications inherent in hydraulic, pneumatic or mechanical actuation.

Conveniently, the brake assembly or other speed changing device is mounted about an axis of rotation of the transmission, and acts thereon via one or more axially extending connections, for example in the form of one or more sleeves. Endmost mounting of the brake assembly or other speed changing device is preferred so as to give ready access to the circumference and one annular end surface, for the purposes of power and control links.

Where two brakes are provided, they may be nested one within the other or arranged side by side. In both cases a common grounding element is preferably provided between the brakes. In the case of one brake and two digital clutches, the clutches may also be nested or arranged side by side, or housed within the cylindrical envelope of the brake.

Other features of the invention will be apparent from the following description of preferred embodiments shown by way of example only in the accompanying drawings in which:-
Figs. 1 and 2 show in diagrammatic half-section embodiments having a two-train gear module.
Fig. 3 shows in diagrammatic half-section a generic embodiment having a two-train gear module.
Figs. 4-6 show in diagrammatic half-section some alternative control modules.
Figs. 7-12 show in end elevation, axial section and transverse section, a transmission embodying the principles of the schematic layout of Fig. 5.
Figs. 13 and 14 show in diagrammatic half-section some control modules with an input from the drive side of the transmission.
Fig. 15 shows nesting of plural devices to give multiple controllable outputs from a single input.

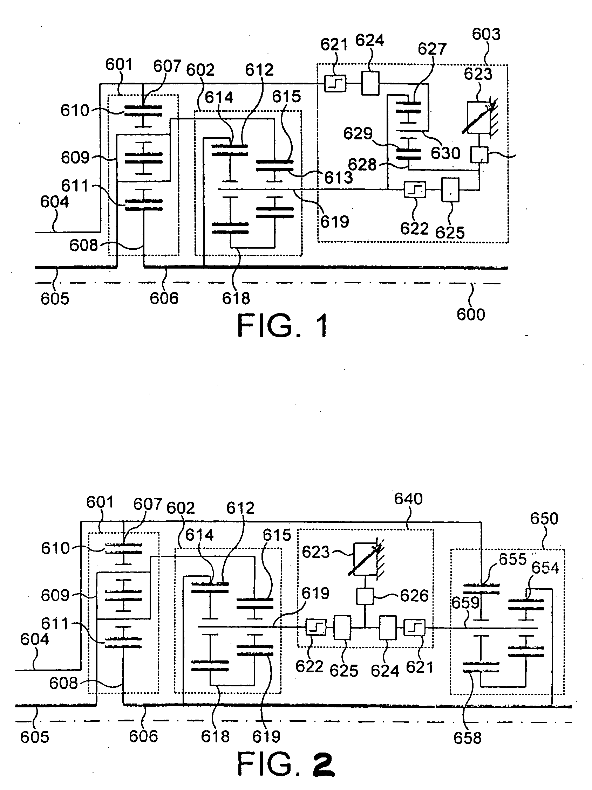

Fig. 1 illustrates an embodiment of the invention shown as a half-section about a centreline 600.

This embodiment comprises a differential module 601, a gear module 602 and an actuation (control) module 603. An input 604 is provided from a torque provider (such as an i.c. engine) and the transmission has oppositely directed output shafts 605, 606.

The differential module 601 comprises an epicyclic gear train having annulus 607, sun 608, planet carrier 609 and double planets 610, 611.

The gear module 602 comprises two epicyclic gears side by side with common sun 618 and planet carrier 619, and respective planets 612, 613 and annuluses 614, 615.

The actuation module includes two digital clutches 621,622 and a brake 623, of the kind previously described. The digital clutches 621, 622 each have in series a torque limiting clutch 624, 625 which avoids sudden shock to the transmission in the event that the digital clutch has a very sudden engagement characteristic. The torque limiting clutch may for example include a belleville washer to limit the instant load capacity thereof. A torque and speed sensor 626 is provided on the input side of the brake 623.

An epicyclic gear is also provided between the torque paths associated with each digital clutch, and comprises the usual annulus 627, sun 628, planets 629 and planet carrier 630.

In use the output shafts may direct torque to front and rear axles, and the device allows a variation in the torque ratio. Thus, for example the front/rear torque split may be 40:60 for good acceleration performance, or may be split 60:40 for stable cornering performance.

Connectivity of the transmission of Fig. 1 is as follows. The input 604 drives the differential annulus 607 and provides a torque input to one of the digital clutches 621. The first output 605 is connected via the differential planet carrier 609 to one annulus 615 of the gear module. The other annulus 614 is connected to output shaft 606, which is also connected to differential sun 608. The planet carrier 619 of the gear module provides an input to the second digital clutch 622, and is also coupled to the annulus 627. Finally, the output of the digital clutch 621 is connected to the brake 623 via planet carrier 630, planets 629 and sun 628.

In operation drive torque from the input 604 will be distributed directly to the output shafts 605, 606 by the differential module 601 in proportion to the resistance to rotation of those shafts, which in a vehicle is determined by the road surface resistance.

If digital clutch 622 is engaged, and resistance exerted by the brake 623, the carrier 619 will be slowed relative to the output shaft 606, and as a result will rotate around the common suns 618. The unequal ratios of the epicyclic gears in the gear module 602 will result in a speed bias, which will act on the differential carrier 609 by virtue of the connection from annulus 615. This will in consequence bias the differential gear to distribute torque from output shaft 606 to output shaft 605.

In the event that digital clutch 622 is released, and digital clutch 621 is engaged, the brake 623 can provide a drag via the epicyclic gear of the actuation module 603 which has the effect of increasing the speed of carrier 619, and in consequence distributing torque from output shaft 605 to shaft 606.

The brake 623 is of course under the control of an external computer, and can be locked or modulated on demand in order to give the appropriate speed change to the carrier 619, and progressive distributing torque from one output shaft to the other.

A park lock can be obtained by closing both digital clutches 621, 622, and locking the brake 623.

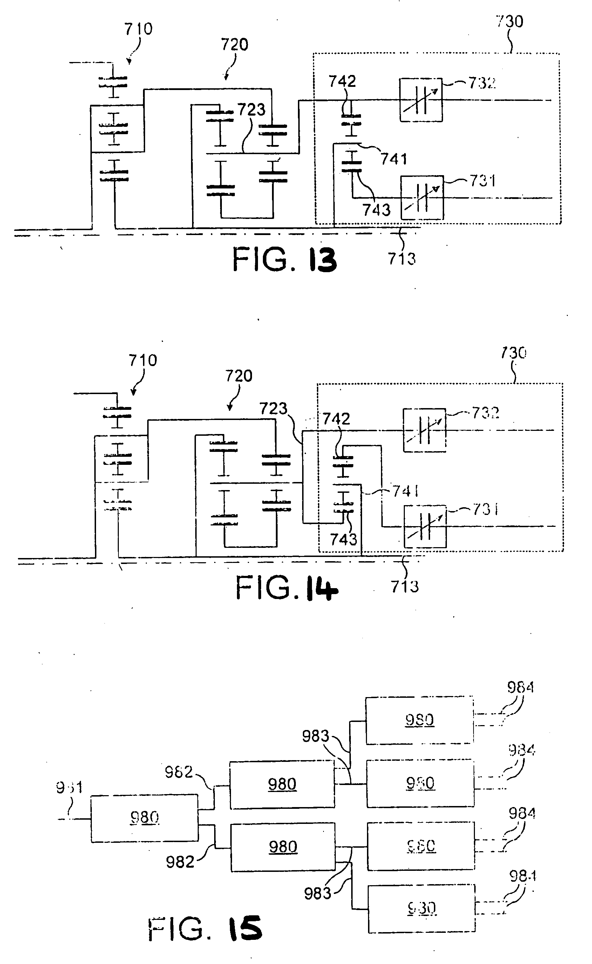

The following table gives a non-exhaustive list of conditions which are available with the transmission of Fig. 13.

| Condition | Clutch 621 | Clutch 622 | Brake 623 | Modulation |
|---|---|---|---|---|
| Unbiased differential gear 601, no torque vectoring | Open | Open | Off | None |
| Locked differential gear 601 | Closed | Closed | Off | None |
| Park or hill start or creep mode | Closed | Closed | On | Brake 623 locked to provide park action on/off modulation to provide creep or hill start option |
| Torque preferentially vectored to output 605 | Open | Closed | On | Increased torque from brake 623 |
| Torque preferentially vectored to output 606 | Closed | Open | On | Increased torque from brake 623 |

Fig. 2 shows an alternative transmission arrangement corresponding to Fig. 1, and in which common parts carry the same reference numerals. Thus the differential module 601 and gear module 602 are identical to the embodiment of Fig. 13, and have the same connectivity.

An actuation module 640 comprises the digital clutches 621, 622, torque limiting clutches 624, 625 and brake 623.

A second gear module 650 mirrors gear module 602. Thus in the case of modules 602, an input to one annulus 654 is from the output shaft 606. The input to the other annulus 655 of the second module is from the input shaft 604. The suns 658 of the second gear module are fixed for rotation together, and the carrier 659 provides an input to digital clutch 621.

As before engagement of one or other digital clutch alters the torque bias to the output shafts 605, 606 according to the braking torque available from modulation of brake 623. The skilled person will appreciate that the arrangement of Fig. 2 is somewhat disadvantageous because power supply to the actuation module 640 must cross the drive input to the second gear module 650; thus for an electrical power supply, suitable slip rings or the like are necessary. The torque sensor 626 may be used to provide an input to the control computer (ECU).

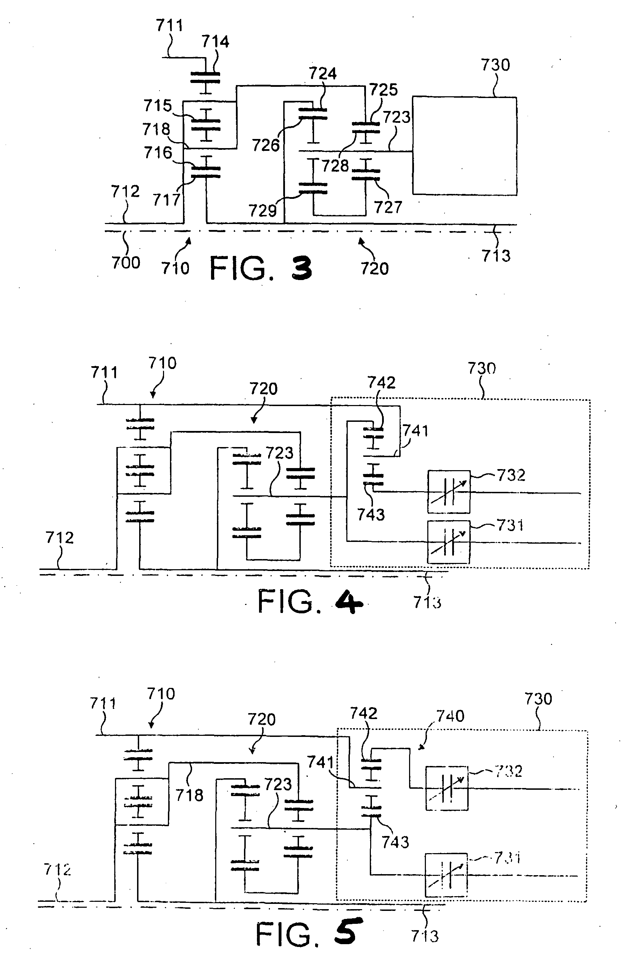

Figs. 3-6 illustrate schematically in half section various embodiments of the invention. Common parts are indicated by the same reference numeral.

Fig. 3 shows a transmission having a rotational axis 700, a differential gear module 710, a torque biasing gear module 720 and an actuation (control) module 730.

The differential gear module 710 comprises an input 711, and two outputs 712, 713. The module 710 comprises annulus 714, double planets 715, 716, sun 717 and planet carrier 718. As illustrated, the input 711 drives the annulus, whereas outputs 712, 713 are driven by the sun 717 and planet carrier 718.

The torque distributing gear module 720 comprises two epicyclic gear trains side by side and having suns 727, 729 linked for rotation in common, and a common planet carrier 723. Also illustrated are planets 726, 728 annuluses 724, 725 connected one each to the differential planet carrier 718, and to the output shaft 713. The control module 730 acts on the planet carrier 723 to cause slowing down or speeding up, thereby to alter the torque bias from the differential gear 710, as previously explained.

The embodiments of Figs. 4-6 show various embodiments of the actuation module 730 applied to a biasing module 720 with common suns (as shown in Fig. 3).

Fig. 4 corresponds to Fig. 3 and illustrates by way of example, a suitable actuation module 730. The planet carrier 723 is connectable to ground (typically the transmission casing) via one of two brakes 731, 732 which are operable alternately. One brake 731 acts directly on the planet carrier 723, whereas the other acts via an epicyclic actuation train 740. Thus train 740 comprises a planet carrier 741 connected to the input 711, an annulus 742 connected to the planet carrier 723, and a sun 743 connected to the second brake 732. The effect of train 740 is to speed up the planet carrier 723 on application of the brake 732.

Fig. 5 shows how the modules 710, 720 of Fig. 4 can be connected differently to the brakes 731, 732. In particular the brake 732 is connected to the annulus 742, whereas the carrier 741 is connected to the input 711. Again, the train 740 has the effect of speeding up the carrier 723 on application of the brake 732.

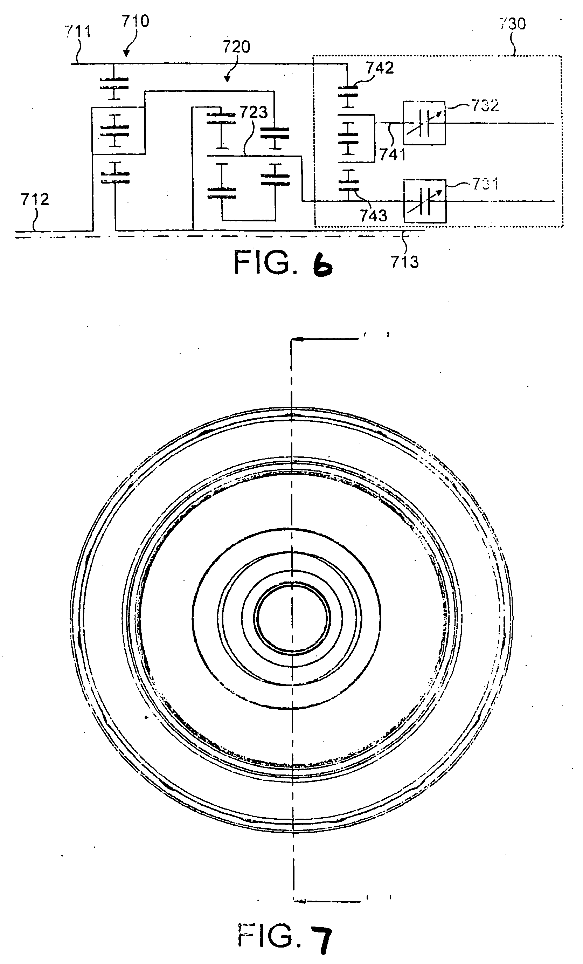

Fig. 6 shows how the modules 710, 720 may be connected to the brake 732 via a double planet epicyclic gear. In this case the annulus 742 is connected to the input 711, and the planet carrier 741 is connected to the brake 732.

The arrangement of Fig. 6 gives greater symmetry of operation at the expense of additional planet gears in train 740, and a more complex planet carrier 741. By using double planets, the brake 732 can act on the carrier 723 with substantially the same speed ratio as the brake 731.

Figs. 7-12 illustrates an embodiment corresponding to the schematic representation of Fig. 5. Corresponding parts carry the same reference numerals.

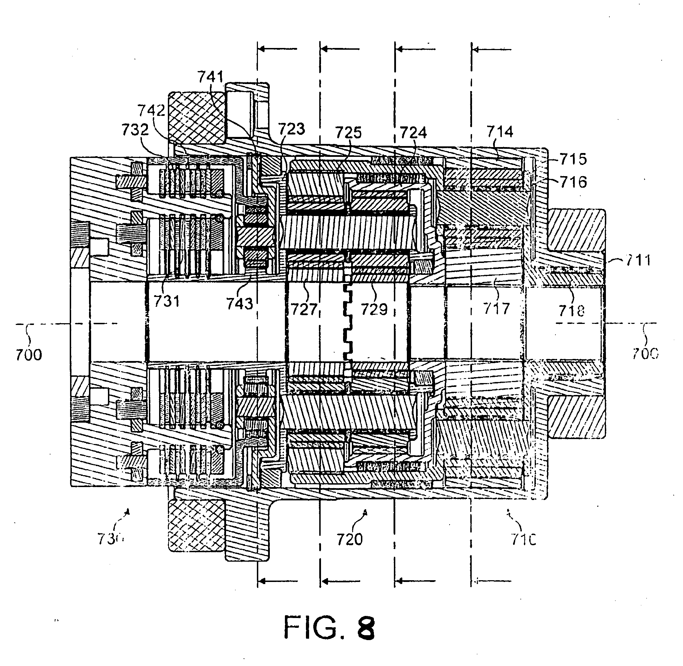

The end elevation of Fig. 7 illustrates the generally cylindrical nature of the transmission, and the axial section of Fig. 8 illustrates how the components may be conveniently packaged into a compact unit with co-axial brakes 731, 732 nested one within the other about a rotational axis 700.

Fig. 8 indicates generally how the axes of rotation of the elements of the transmission are arranged to give a compact device. The planets 727, 729 of the gear module are linked by representative castellations. The axes of the planet carriers of the differential module 710, gear module 720 and actuation modules 730 are at successively reducing radii. The annulus 724 adjacent the differential module 710 has a greater radius than the annulus 725 which is adjacent the actuation module 730, and as a consequence an annular spacing element is provided.

The brakes 731, 732 are nested radially and have a common intermediate grounding element, as illustrated. All components of the device are contained within a substantially cylindrical casing, and the individual modules 710, 720, 730, 740 can be assembled and tested individually prior to assembly.

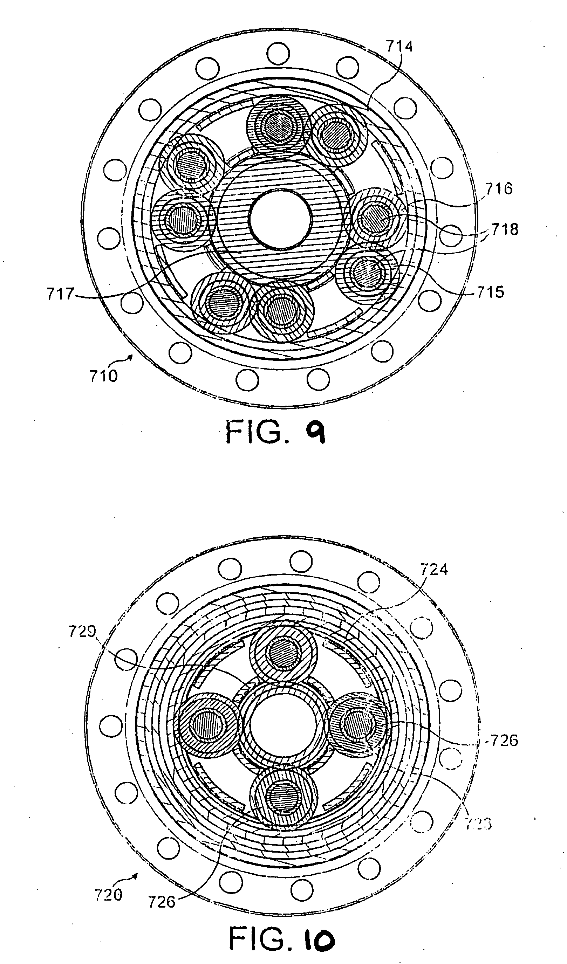

Fig. 9 is a transverse section through the differential module 710 and shows the double planets 715, 716 between annulus 714 and sun 717. The output shaft 712 makes a splined connection with the sun 717, and the input shaft 711 is connected to the annulus 714. The double planet carrier 718 is connected to the annulus 725 of the gear module 720 which is adjacent the control module 730.

Fig. 10 is a transverse section through the first epicyclic gear of the gear module 720, and shows annulus 724, sun 729, and planets 726. Planet carrier 723 is common with the second epicyclic gear.

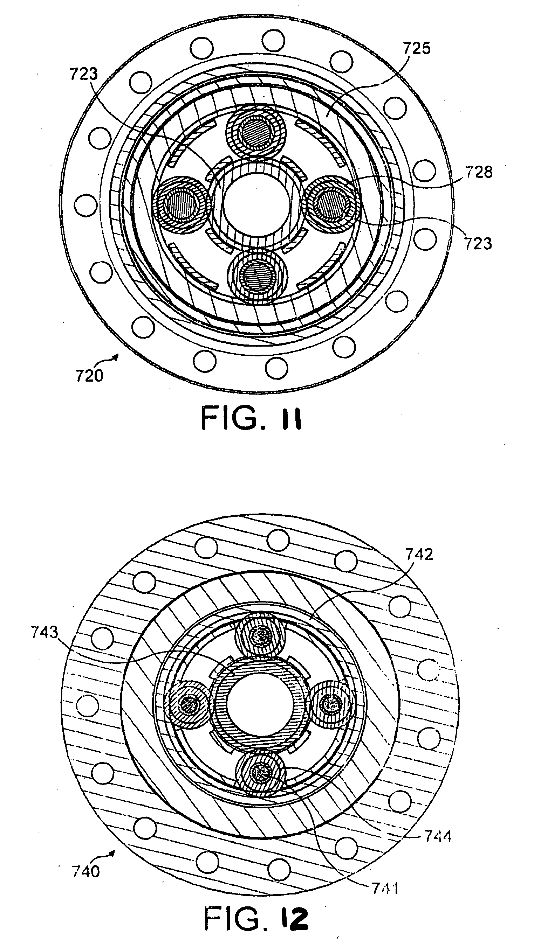

Fig. 11 corresponds to Fig. 10 and shows the second epicyclic gear of the gear module, which comprises annulus 725, sun 727, planets 728 and common carrier 723.

Fig. 12 is a transverse section through the epicyclic train 740 of the control module 730, and comprises annulus 742, sun 743, planets 744 and planet carrier 741.

Connectivity is as illustrated in the schematic diagram of Fig. 5.

In Fig. 13, yet another alternative embodiment provides an input to the actuation module from one of the output shafts 713, rather than from the input 711. Thus the epicyclic gear of the actuation module has an annulus 742 connected to the planet carrier 723, and a planet carrier 741 connected to the output shaft 713. Brake 731 is coupled to the sun 743, and brake 732 acts on the annulus 742.

Fig. 14 shows alternative connectivity for the arrangement of Fig. 13, in which brake 732 is connected to the planet carrier 723. Brake 731 acts through a differential gear in which the annulus 742 is connected to brake 731, the planet carrier 741 is driven by the output shaft 713, and the sun 743 is also connected to the planet carrier 723.

Fig. 15 illustrates how embodiments of the invention may be combined to give multiple outputs. Thus a plurality of transmission modules 980 are connected so that the outputs of one module provide the inputs to the next module in sequence. Thus three modules can be linked to give four outputs 983 from one input 981, and five modules will give eight outputs 984, and so on. Such a system may be useful in for example ship transmissions, where a number of propellers and thrusters may be required to be driven from a single power source.

In this specification, the digital clutches are optional in embodiments where two speed adjusting devices are provided in the control or actuation module. The digital clutches are incorporated in these embodiments to provide an absolute interruption to drive, and consequently eliminate energy losses or degradation in the speed adjusting device itself. Thus typically drag and idle wear in a brake will be avoided. The term 'digital clutch' includes any device suitable to make or break drive on demand, but is particularly used in the described embodiments to indicate a clutch having little thermal capacity - such a clutch may thus be physically compact. In each case a digital clutch may include some shock-reducing element to ensure smooth engagement thereof.

In the case of a single speed adjusting device (e.g. Fig. 1) the digital clutches, or equivalent, are essential because in addition to breaking drive, the clutches are part of the respective torque path where torque biasing is commanded.

Certain embodiments of the invention show one brake having two operative paths (Fig. 1) or two brakes (Fig. 4); these embodiments provide slowing or speeding of a gear module. As previously noted, other means of speeding-up or slowing-down are possible, including for example hydraulic, pneumatic or electric motors. Thus an electric motor may provide a single output from an actuation module to a planet carrier of a gear module (for example the embodiment of Fig. 3), and the motor may run at a neutral speed where torque vectoring is not required. In cases where torque vectoring is required the motor may be speeded-up or slowed-down according to an input signal from the control computer. A digital clutch may of course be provided at the motor output to permit the motor to be disengaged when not required.

The skilled man will also realize that in certain vehicle applications, the locking of multiple brakes may provide a locked transmission, which is useful as a parking brake or hill hold. The locking of multiple brakes may also provide an emergency brake in the event that a conventional braking system has failed.

This specification uses the term 'brake' to indicate any device capable of transmitting a retarding torque between two members; it will be appreciated that many other devices, such as single or multi-plate clutches, can be employed as brakes.

It will also be understood that in embodiments where a differential gear is provided, the differential ratio may be other than 50:50. An unequal ratio is relatively easy to achieve using an epicyclic differential gear, and may be useful in machinery and non-automotive applications. However most of the embodiments disclosed herein are applicable to automotive drive lines, and are particularly intended for variation of front to back, and side to side biasing of driveshaft torque. Epicyclic differential gears are generally illustrated, but conventional bevel gear differentials may be substituted in some embodiments, particularly those which do not use a double planet epicyclic gear. Any suitable torque input device, for example driving axially or radially, may be employed.

In this specification some embodiments are described in relation to a 'between wheels' embodiment, and some are described in relation to a 'between axles' embodiment. Generally, the transmissions described are suitable for either position provided the required number of input(s)/output(s) are provided.

The transmissions described herein are typically for motor vehicles. However it will be understood that other non-automotive applications are possible, and that the input(s)/output(s) can be directed in any required direction. Furthermore, in many cases the arrangements described herein can be 'reversed', so that output(s) become input(s).

The skilled man will choose particular ratios of the epicyclic gear trains to suit the intended application, and no limitation is intended in the preferred embodiment to the particular sizes or comparative sizes of the gear elements which are illustrated.

## Claims

1. A torque biasing unit for a motor vehicle and having an input (604), two outputs (605,606), and therebetween an epicyclic differential module (601) adapted to distribute torque from the input to the outputs, the unit further comprising a gear module (602) and a control module (603), said gear module comprising epicyclic gear trains side by side and having a common planet carrier (619), and independently rotatable planets thereon (612,613), the gear module being operatively connected to the planet carrier (609) of said differential module, and said control module (603) being adapted to increase and decrease the speed of the planet carrier (619) of said gear module to bias the differential module to provide more torque to one of said outputs than to the other, wherein said differential module (601), gear module (602), and control module (603) have a common axis of rotation, and are arranged in axial series with the gear module centremost, wherein said epicyclic differential module comprises an annulus (607) connected to said input, a sun (608) connected to one of said outputs and a planet carrier (609) connected to the other of said outputs, **characterized in that** the planet carrier of the differential module has double planets (610,611) operative in series between said annulus and sun, and wherein said gear module comprises two epicyclic gear trains side by side and having suns (618) joined for rotation in common, one annulus (615) of the gear module being connected to the planet carrier (609) of said differential module, and the other annulus (614) of the gear module being connected to one of said outputs (606).

2. A unit according to claim 1 whereas one of said outputs is a shaft (606), and the suns (618) of said gear module are co-axial therewith.

3. A unit according to claim 2 wherein the sun (608) of said differential module is co-axial with said suns (606) of said gear module.

4. A unit according to claim 2 or claim 3 wherein the other of said outputs (605) is a shaft, and said outputs are co-axial.

5. A unit according to claim 4 wherein said outputs (605,606) are oppositely directed.

6. A unit according to any preceding claim wherein said control module (603) comprises two disconnectable brakes (731,732) and an epicyclic control module train comprising an annulus (742) connected to said input (711), a sun (743) connected to the carrier (723) of said gear module, double planets and a planet carrier (741), wherein said brakes are connected one each to the planet carrier (723) of the gear module and the planet carrier (741) of the control module train, the brakes being operable in direct and indirect modes, in direct mode one brake being connected to retard the carrier of said gear module, and in indirect mode the other brake being connected to speed up the carrier of said gear module via said epicyclic control module train.

7. A unit according to claim 6 wherein the planet carrier (741) of said epicyclic control module train is radially outside the planet carrier (723) of said gear module.

8. A unit according to claim 6 or claim 7 wherein said brakes (731,732) are radially one within the other.

9. A unit according to claim 8 wherein said brakes have a common grounding element radially therebetween.

## Patentansprüche

1. Vorrichtung zur Drehmomenteinstellung für ein Kraftfahrzeug mit einem Eingang (604), zwei Ausgängen (605, 606) und dazwischen einem epizyklischen Differentialmodul (601), das dazu ausgebildet ist, ein Drehmoment vom Eingang zu den Ausgängen zu verteilen, wobei die Vorrichtung weiter ein Getriebemodul (602) und ein Steuerungsmodul (603) umfasst, wobei das Getriebemodul epizyklische Getriebestränge nebeneinander angeordnet und mit einem gemeinsamen Planetenträger (619) und unabhängig drehbaren Planeten (612, 613) darauf umfasst, wobei das Getriebemodul in Wirkverbindung mit dem Planetenträger (609) des Differentialmoduls verbunden ist und das Steuerungsmodul (603) dazu ausgebildet ist, die Geschwindigkeit des Planetenträgers (619) des Getriebemoduls zu erhöhen und zu verringern, um das Differentialmodul so zu beeinflussen, dass einer der Ausgänge mit mehr Drehmoment beaufschlagt wird als der andere, wobei das Differentialmodul (601), das Getriebemodul (602) und das Steuerungsmodul (603) eine gemeinsame Rotationsachse besitzen und in axialer Abfolge so angeordnet sind, dass das Getriebemodul im Innersten sitzt, wobei das epizyklische Differentialmodul ein mit dem Eingang verbundenes Hohlrad (607), eine mit einem der Ausgänge verbundene Sonne (608) und einen mit dem anderen Ausgang verbundenen Planetenträger (609) umfasst, **dadurch gekennzeichnet, dass** der Planetenträger des Differentialmoduls Doppelplaneten (610, 611) aufweist, die hintereinander zwischen dem Hohlrad und der Sonne in Wirkverbindung angeordnet sind, und wobei das Getriebemodul zwei epizyklische Getriebestränge nebeneinander angeordnet und mit zur gemeinsamen Rotation zusammengeschlossenen Sonnen (618) umfasst, wobei ein Hohlrad (615) des Getriebemoduls mit dem Planetenträger (609) des Differentialmoduls verbunden ist und das andere Hohlrad (614) des Getriebemoduls mit einem der Ausgänge (606) verbunden ist.

2. Vorrichtung nach Anspruch 1, wobei einer der Ausgänge eine Welle (606) ist und die Sonnen (618) des Getriebemoduls dazu koaxial sind.

3. Vorrichtung nach Anspruch 2, wobei die Sonne (608) des Differentialmoduls zu den Sonnen (606) des Getriebemoduls koaxial ist.

4. Vorrichtung nach Anspruch 2 oder Anspruch 3, wobei der andere der Ausgänge (605) eine Welle ist und die Ausgänge koaxial sind.

5. Vorrichtung nach Anspruch 4, wobei die Ausgänge (605, 606) in entgegen gesetzte Richtungen weisen.

6. Vorrichtung nach einem der vorhergehenden Ansprüche, wobei das Steuerungsmodul (603) zwei lösbare Bremsen (731, 732) und einen epizyklischen Steuerungsmodulstrang umfasst, der ein mit dem Eingang (711) verbundenes Hohlrad (742), eine mit dem Träger (723) des Getriebemoduls verbundene Sonne (743), Doppelplaneten und einen Planetenträger (741) umfasst, wobei jeweils eine der Bremsen mit dem Planetenträger (723) des Getriebemoduls und dem Planetenträger (741) des Steuerungsmodulstrangs verbunden ist, wobei die Bremsen in einem direkten und einem indirekten Modus betätigbar sind, wobei über den epizyklischen Steuerungsmodulstrang im direkten Modus eine Bremse so eingelegt ist, dass sie den Träger des Getriebemoduls verzögert, und im indirekten Modus die andere Bremse so eingelegt ist, dass sie den Träger des Getriebemoduls beschleunigt.

7. Vorrichtung nach Anspruch 6, wobei der Planetenträger (741) des epizyklischen Steuerungsmodulstrangs radial außerhalb des Planetenträgers (723) des Getriebemoduls liegt.

8. Vorrichtung nach Anspruch 6 oder Anspruch 7, wobei die Bremsen (731, 732) radial ineinander angeordnet sind.

9. Vorrichtung nach Anspruch 8, wobei die Bremsen ein gemeinsames Masseelement radial dazwischen angeordnet aufweisen.

## Revendications

1. Unité pour dériver le couple pour un véhicule à moteur, présentant une entrée (604), deux sorties (605, 606) et un module différentiel épicycloïdal (601) prévu entre elles pour distribuer le couple de l'entrée aux sorties, l'unité comportant en outre un module d'embrayage (602) et un module de commande (603), ledit module d'embrayage comportant des trains d'engrenages épicycloïdaux côte à côte et présentant un porte-satellites (619) commun, et des satellites (612, 613) sur celui-ci qui peuvent tourner de manière indépendante, le module d'embrayage étant raccordé en fonctionnement au porte-satellites (609) dudit module différentiel, et ledit module de commande (603) étant prévu pour augmenter et diminuer la vitesse du porte-satellites (619) dudit module d'embrayage pour orienter le module différentiel pour fournir plus de couple à une desdites sorties par rapport à l'autre, dans laquelle ledit module différentiel (601), ledit module d'embrayage (602) et ledit module de commande (603) présentent un axe de rotation commun et sont disposés en série axiale avec le module d'embrayage le plus au centre, unité dans laquelle ledit module différentiel épicycloïdal comporte une couronne (607) relié à ladite entrée, à un planétaire (608) relié à une desdites sorties et à un porte-satellites (609) relié à l'autre desdites sorties, **caractérisée en ce que** le porte-satellites du module différentiel présente des satellites doubles (610, 611) fonctionnant en série entre ladite couronne et le planétaire, et dans laquelle ledit module d'embrayage comporte deux trains d'engrenages épicycloïdaux côte à côte et présentant des planétaires (618) couplés pour la rotation en commun, une couronne (615) du module d'embrayage étant reliée au porte-satellites (609) dudit module différentiel, et l'autre couronne (614) du module d'embrayage étant reliée à une desdites sorties (606).

2. Unité selon la revendication 1, dans laquelle une desdites sorties est un arbre (606), et dans laquelle les planétaires (618) dudit module d'embrayage sont coaxiaux à celui-ci.

3. Unité selon la revendication 2, dans laquelle le planétaire (608) dudit module différentiel est coaxial avec lesdits planétaires (606) dudit module d'embrayage.

4. Unité selon la revendication 2 ou la revendication 3, dans laquelle l'autre desdites sorties (605) est un arbre, et dans laquelle lesdites sorties sont coaxiales.

5. Unité selon la revendication 4, dans laquelle lesdites sorties (605, 606) sont orientées de manière opposée.

6. Unité selon l'une quelconque des revendications précédentes, dans laquelle ledit module de commande (603) comporte deux freins pouvant être débrayés (731, 732) et un train de module de commande épicycloïdal comportant une couronne (742) raccordée à ladite entrée (711), un planétaire (743) raccordé au porte-satellites (723) dudit module d'embrayage, des satellites doubles et un porte-satellites (741), dans laquelle lesdits freins sont raccordés chacun au porte-satellites (723) du module d'embrayage et au porte-satellites (741) du train de module de commande, les freins pouvant fonctionner en modes direct et indirect, en mode direct un frein étant raccordé pour ralentir le porte-satellites dudit module d'embrayage, et en mode indirect l'autre frein étant raccordé pour accélérer le porte-satellites dudit module d'embrayage par l'intermédiaire dudit train de module de commande épicycloïdal.

7. Unité selon la revendication 6, dans laquelle le porte-satellites (741) dudit train de module de commande épicycloïdal est situé radialement en dehors du porte-satellites (723) dudit module d'embrayage.

8. Unité selon la revendication 6 ou la revendication 7, dans laquelle lesdits freins (731,732) sont situés radialement l'un dans l'autre.

9. Unité selon la revendication 8, dans laquelle lesdits freins présentent un élément commun de mise à la terre situé radialement entre eux.
